# EUROPÄISCHE PATENTSCHRIFT

(11) **EP 2 240 066 B1**
(45) Veröffentlichungstag und Bekanntmachung des Hinweises auf die Patenterteilung: **20.03.2013**
(21) Anmeldenummer: 09703752.7
(22) Anmeldetag: 22.01.2009
(51) Int. Cl.: A47L 23/26, B60S 3/04

(54) **REINIGUNGSVORRICHTUNG**
CLEANING DEVICE
DISPOSITIF DE NETTOYAGE

(30) Priorität: 25.01.2008 DE 202008001109 U
(43) Veröffentlichungstag der Anmeldung: 20.10.2010
(73) Patentinhaber: Maschinenfabrik Heute GmbH & Co. KG, 42657 Solingen (DE)
(72) Erfinder: LÖWE, Christian, 42659 Solingen (DE)
(74) Vertreter: Lippert, Stachow & Partner
(86) Internationale Anmeldenummer: PCT/EP2009/000375
(87) Internationale Veröffentlichungsnummer: WO 2009/092578

(56) Entgegenhaltungen:
- WO-A-90/07442
- WO-A-03/092747
- DE-U- 7 520 999
- GB-A- 399 129
- JP-A- 59 140 149
- US-A- 2 989 766

## Beschreibung

Die Erfindung betrifft eine Reinigungsvorrichtung für verschmutzte und/oder kontaminierte Oberflächen, insbesondere für Laufflächen von Schuhen oder von Reifen von Fahrzeugen, wobei die Reinigungsvorrichtung eine Bürstenvorrichtung mit einen Borstenträger und Borsten umfassenden Bürsten zur reinigenden Behandlung der Laufflächen sowie ein Stützvorrichtung zur Abstützung der Laufflächen in einer Stützebene aufweist, wobei die Bürsten in einem Aufnahmeraum angeordnet sind, die Stützebene einen Arbeitsraum für die Laufflächen begrenzt und die Borsten sich jeweils mit einem freien Ende vom Aufnahmeraum in den Arbeitsraum hinein erstrecken. Hierbei schließen die Borsten in einer Ruheposition mit der Stützebene einen Neigungswinkel größer 0° und kleiner 90° ein, durchgreifen die Stützebene mit ihren freien Enden und überragen die Stützebene mit einem Betrag.

Derartige Reinigungsvorrichtungen sind vielfach bekannt. Hierbei kann die zu reinigende Oberfläche zum Beispiel über die Borsten gezogen und Schmutz von der Oberfläche abgebürstet werden.

In der DE 75 20 999 U und der US 2 989 766 A wird jeweils eine gattungsgemäße Reinigungsvorrichtung beschrieben, wobei deren Borsten zu Bürstenkörper zusammengefasst sind, in denen sie die Stützebene überragen.

In der GB 399 129 A und der WO 90/07442 wird jeweils eine Reinigungsvorrichtung offenbart, deren Bosten auf einer Walze parallel zur Stützebene aufgezogen sind, wobei die Borsten bei Drehung der Walze jeweils in einer oberen Position die Stützebene durchragen.

Die in der JP 59140149 A beschriebene Reinigungsvorrichtung weist Borstenbüschel mit zusätzlich eingezogenen Metallborsten zur Abstützung zu reinigenden Reifenprofilen auf.

Die in der WO 03/092747 A1 offenbarte Reinigungsvorrichtung ist als Hygieneschleuse ausgebildet, wobei sie zusätzlich eine Vorrichtung zur Erzeugung eines Schaumteppichs aufweist, deren Schaumdüsen in Bostenmatten integriert sind.

Eine verbesserte Reinigungswirkung kann, wie in der DE 202 12 289.1 U1 beschrieben, dadurch erzielt werden, indem die Borsten auf Bürstenleisten angeordnet sind, die über einen Antrieb hin und her bewegt werden können. Eine derartige Anlage ist zwar reinigungseffizient, aber auch aufwendig.

Der Erfindung liegt daher die Aufgabe zugrunde, eine Reinigungsvorrichtung der eingangs genannten Art bereitzustellen, die verbesserte Reinigungswirkung ermöglicht.

Die gestellte Aufgabe wird erfindungsgemäß durch die Merkmale des Anspruches 1 gelöst und insbesondere Dadurch gelöst, dass die Reinigungsvorrichtung für eine Hauptbewegungsrichtung ausgelegt ist, in der die Fahrzeuge über die Stützebene fahrbar sind bzw. die Laufflächen von Schuhen an der Stützebene (E) abrollbar sind, und dass sich die Borsten in oder senkrecht zur Hauptbewegungsrichtung längserstrecken.

Im Stand der Technik sind die Borsten in üblicher Weise so zusammenfasst, dass sie zu ihren freien Enden hin fächerartig auseinander gehen, um u.a. mit ihren freien Enden eine möglicht große Fläche zu bilden. Bei einer senkrechten Belastung würden sich die Borstenenden jedoch gegenseitig behindern und den abgeschabten Schmutz zuschieben. Dieses wird durch die in der DE 75 20 999 U beschriebenen Anordnung mit radial nach außen geneigten Borstenbüscheln verstärkt. Infolge der Längserstreckung der Borsten in oder senkrecht zur Hauptbewegungsrichtung kann verhindert werden, dass sich die Borsten abgeschabten Schmutz einander zuschieben. Ferner können sie sich nicht gegenseitig behindern, indem ihre Enden beim Schaben gegeneinander stoßen. Hierdurch kann eine Verbesserung der Reinigungswirkung erzielt werden. Somit können die Borsten dichter gepackt auf dem Borstenträger angeordnet werden, welches Reinigungswirkung weiter verbessern kann. Zudem wird können die Borsten in Borstenbüscheln oder -Reihen sich gegenseitig besser stützen, so dass eine erhöhte Steifigkeit und damit eine verbesserte Reinigungswirkung erzielt werden kann.

Wenn sich die Borsten in Hauptbewegungsrichtung längserstrecken, ist dies vorteilhaft bei der Reinigung von Laufflächen mit Längsrillen. Wenn sich die Borsten senkrecht zur Hauptbewegungsrichtung längserstrecken, ist dies vorteilhaft bei der Reinigung von Laufflächen von Bereifungen mit zum ausgeprägten Querrillen, wie bei Baustellenwerkzeugen und landwirtschaftlichen Maschinen.

Dadurch, dass die Borsten in einer Ruheposition mit der Stützebene einen Neigungswinkel größer 0° und kleiner 90° einschließen, die Stützebene mit ihren freien Enden durchgreifen und die Stützebene mit einem Betrag überragen, sind die Borsten unter einer äußeren Belastung senkrecht zur Stützebene, wie unter Anlage oder Abrollen der Lauffläche an der Stützebene, um eine Achse parallel zur Stützebene so elastisch biegsam, dass ihre freien Enden relativ zur Stützebene bewegbar sind.

In der Ruheposition sind die Borsten somit zur Stützebene geneigt angeordnet. Unter Belastung können die Borsten stirnseitig oder endbereichsseitig mit ihren freien Enden reibend entlang der Lauffläche rutschen. D.h. mit Überfahren der Stützebene werden die die Stützebene durchragenden freien Enden heruntergebogen und schaben hierbei über die Lauffläche. Dies kann über einem Abrollen der Lauffläche über die Stützebene (Auto) oder durch Absenken eines Schuhes auf die Stützebene (Gehen) erfolgen. Bei einem normalen Gehen erfolgt auch in der Regel ein Abrollen des Fußes auf einem Untergrund. Die Effizienz kann einer Reihe von Faktoren, insbesondere von dem Weg, über den die freien Enden über die Oberfläche entlang schaben, die Knicksteifigkeit und Elastizität der Borsten abhängen. Eine effektive Reinigung der Lauffläche kann auch bei einem reinen Absenken, d.h. bei einem Absenken senkrecht zur Stützebene, erzielt werden. Mit Entlastung der Borsten können diese wieder in ihre Ruhestellung elastisch zurückfedern.

Somit wird eine zum Abbürsten notwendige Relativbewegung zwischen den Borstenenden und der zu reinigenden Oberfläche ohne zusätzliche bewegbare Teile, insbesondere ohne motorische Antriebe, erzielt, so dass ein sehr einfacher und robuster Aufbau der Reinigungsvorrichtung möglich ist.

Vorzugsweise sind die Borsten in dem Borstenträger fest verankert. Damit können die Borsten unter endseitiger Belastung mechanisch wie ein "eingespannter Balken" reagieren und eine Biegelinie ausbilden, bei der das freie Ende stärker als ein Ansatzbereich der Borsten am Borstenträger geborgen ist, wodurch das Abschaben tangential zur Lauffläche begünstigt werden kann. Die Relativbewegung zwischen Lauffläche wird u.a. von dem Neigungswinkel und dem Überstand bestimmt, in dem die Borsten über der Stützebene überstehen. Ein Optimum kann u.a. von der Art der zu reinigenden Lauffläche und des Borstenwerkstoffes abhängen. Neigungswinkel kann größer 30° und kleiner 85°, vorzugsweise größer 60° und kleiner 80° und idealerweise zum Einsatz zur Reinigung bei Laufflächen eines Fahrzeuges etwa 70° sein.

Die Bürsten können so angeordnet sein, dass sie unter Belastung in Neigungsrichtung relativ zur Stützebene verschieblich angeordnet sind, wodurch das Abbürsten unterstützt werden kann. Der Borstenträger ist vorzugsweise statisch zur Stützebene angeordnet. Dies vereinfacht den Aufbau der Reinigungsvorrichtung erheblich.

Als Werkstoff für die Borsten kommen im Prinzip alle üblichen Borstenwerkstoffe in Frage. Bevorzugt kommt Kunststoff, insbesondere Polyamid oder Copolyamid, als Borstenwerkstoff in Betracht.

Vorzugsweise erstrecken sich die Borsten der Reinigungsvorrichtung bezüglich der Stützebene zu gleichen oder etwa gleichen Teilen zu beiden Richtungen senkrecht zur Hauptbewegungsrichtung. Ein Teil der Borsten erstreckt sich zumindest mit einer Komponente zu einer Richtung senkrecht zur Hauptbewegungsrichtung und ein hierzu gleichgroßer oder etwa gleichgroßer Teil erstreckt sich zumindest mit einer Komponente entgegengesetzt hierzu. Dadurch können bei einer Reinigung einer Lauffläche auftretende Reibungskräfte senkrecht zur Laufrichtung sich zumindest zum überwiegenden Teil so aufheben, dass die Lauffläche unter Einwirkung der Reibungskräfte bezüglich der Stützebene nicht in eine Richtung senkrecht zur Hauptbewegungsrichtung beschleunigt werden kann. Somit kann im Idealfalle kein Kraftimpuls auf die Laufflächen bzw. auf das Fahrzeug senkrecht zur Hauptbewegungsrichtung erfolgen. Ein über die Stützebene verfahrendes Fahrzeug kann also über die Reibungskräfte nicht senkrecht zur Hauptbewegungsrichtung abgelenkt werden und die Stützebene in Hauptbewegungsrichtung spursicher überfahren. Die Verteilung der Borsten über eine Flächeneinheit der Stützfläche vorzugsweise so ausgelegt sein, dass auch bei einem kleinen Bereich der Stützfläche eine Aufhebung der Reibungskräfte senkrecht zur Hauptbewegungsrichtung gewährleistet ist. Dies ist insbesondere bei Reinigungsvorrichtungen von Vorteil, die zur Reinigung von Schuhsohlen vorgesehen sind.

Vorzugsweise sind die Borsten zu Borstenbüschel zusammengefasst. Diese können in einer Reihe oder mehreren Reihen auf dem Bostenträger angeordnet sind. Im Verbund der Borsten zu Borstenbüscheln kann eine größere Gesamtknickfestigkeit erzielt werden. Dadurch können die Borsten im Borstenbüschel steiler angestellt werden und mit fortschreitender Biegung unter Belastung des Reifens mit größerer Reibungskraft entlang der zu reinigenden Oberfläche reiben und diese abbürsten. Ein weiterer Vorteil ist die mögliche Saugfähigkeit der Büschel, die auch bei nicht saugfähigen einzelnen Borsten dadurch entstehen kann, dass in den Borstenbüscheln zwischen den Borsten Zwischenräume vorhanden sein können, die infolge der Kapillarwirkung netzende Flüssigkeiten oder Fluids ansaugen. Dies kann, wenn die Borstenbüschel ausreichend trocken sind, bewirken, dass Fluid von der Lauffläche abgesaugt und somit dieselbe getrocknet werden kann. Es kann auch, wie weiter unten beschrieben, Fluid beispielsweise zur Desinfektion der Laufflächen zu den Enden der Borsten hin transportiert werden, wobei die Borsten in einem Fußbereich genetzt werden. Die Borsten an sich können aus einem saugfähigen Werkstoff gefertigt sein.

Die Borsten bzw. die Borstenbüschel können bezüglich der Stützebene in einer ersten Reihe mit einer Komponente in einer ersten Richtung senkrecht zur Hauptbewegungsrichtung und in einer zweiten Reihe mit einer Komponente in einer zur ersten Richtung entgegengesetzten zweiten Richtung senkrecht zur Hauptbewegungsrichtung angeordnet sein. Hierzu kann der Borstenträger als Bürstenleiste ausgebildet sein. Dieser kann zum Beispiel lediglich eine Reihe aufweise. Die Bürstenleiste können alternierend um 180° zueinander gedreht aneinanderliegen oder parallel beabstandet zueinander in der Reinigungsvorrichtung angeordnet werden. Dies vereinfacht die Fertigung und Montage der Reinigungsvorrichtung.

Der Borstenträger kann mehrere Reichen aufweisen, die vorzugsweise parallel zueinander angeordnet sind. Vorzugsweise sind erste und zweite Reihen alternierend zueinander angeordnet. Um auf den Borstenträger durch auftretende Reibungskräfte übertragende Reibungskräfte zu minimieren, kann vorgesehen sein, dass auf jedem Borstenträger eine gerade Anzahl von alternierenden Reihen angeordnet ist. Dies erleichtert die Montage, da diese Bürsten parallel zueinander in der Reinigungsvorrichtung eingebaut werden können, ohne dass auf die Ausrichtung der Borsten geachtet werden muss. Vorzugsweise sind die Reihen in ihrer Längserstreckung senkrecht zur oder in Hauptbewegungsrichtung angeordnet. Entsprechend der Reihengeometrie kann der Borstenträger als Bürstenleiste ausgebildet sein. Vorzugsweise weist die Bürstenleiste zwei Reihen auf, wobei sich die Borsten bzw. die Borstenbüschel einer Reihe entgegengesetzt zur anderen Reihe, vorzugsweise voneinander weg erstrecken. Die Bürstenleise kann bezüglich ihrer Längsrichtung bogenförmig ausgebildet sein. Hierbei kann die Bürstenleiste so in der Reinigungsvorrichtung angeordnet sein, dass die Bürstenleiste mittig zur Stützebene hin gewölbt ausgebildet ist. Somit kann die Bürstenleiste nach oben hin durchgebogen sein. Vorzugsweise ist die bogenförmige Ausbildung spiegelsymmetrisch oder etwa spiegelsymmetrisch mit einer mittigen Spiegelsymmetrieebene senkrecht zur Längsrichtung der Bürstenleiste. Mit Belastung der Bürstenleiste kann dieselbe entgegen ihrer Bogenform elastisch von der Stützebene weg zu einer gestreckten Form hin gebogen werden. Mit Entlastung der Bürstenleiste nach Beendigung des Reinigungsvorganges bezüglich dieser Bürstenleiste kann die Bürstenleiste elastisch in ihre ursprüngliche bogenförmige Ausbildung zurückkehren und von unten her gegen die Stützebene bildende Bauteile anstoßen, wodurch von der Lauffläche abgebürstete und an den Borsten anhaftende Schmutzpartikel losgelöst oder losgerüttelt werden können. Diese können hiernach in einer unterhalb der Bürsten angeordneten Auffangwanne aufgefangen werden.

Die Stützvorrichtung kann ein übliches Gestell mit die Stützebene bildenden Stäben aufweisen. Die Stäbe können beabstandet zueinander angeordnet sein und Zwischenräume begrenzen, in denen die Bürsten positioniert sind. Vorzugsweise weisen die Stäbe jeweils einen rechtwinkligen Querschnitt mit jeweils parallel zueinander angeordneten Schmalseiten und großen Seitenflächen auf, wobei die Schmalseiten in der Stützebene angeordnet sind. Hierdurch kann das Widerstandsmoment bezüglich einer Belastung senkrecht zur Stützebene maximal sein. Die Stäbe können auf einem Untergrund zumindest über einen oder mehreren Bereichen ihrer Längserstreckung aufliegen und vorzugsweise mit demselben fest verbunden sein.

Die Stäbe können ein übliches rechtwinkliges Gitter mit Gitterfeldern ausbilden. Vorzugsweise sind zueinander parallele erste Stäbe in Hauptbewegungsrichtung und zueinander parallel zweite Stäbe senkrecht zur Hauptrichtung angeordnet. Damit können die Stäbe kassettenartige Zwischenräume einschließen. In diesen Zwischenräumen kann jeweils eine Bürste angeordnet sein. Die Bürste kann senkrecht zur Hauptbewegungsrichtung in einem Abstand zu den zweiten Stäben und/ oder den ersten Stäben angeordnet sein. Somit kann mittels der Bürste abgebürsteter Schmutz durch die Beabstandung geschaffener Räume zum Beispiel nach unten in eine Auffangwanne fallen.

In jedem Gitterfeld kann eine Gruppe von Borstenbüscheln gleicher Erstreckungsrichtung angeordnet sein. Die Gruppierung bietet den Vorteil, dass in dem Gitterfeld die Borstenbüschel dicht gedrängten zueinander angeordnet sein können. Vorzugsweise sind die Borstenbüschel in den zu einem Gitterfeld benachbarten Gitterfeldern zumindest bezüglich einer Richtung senkrecht zur Hauptbewegungsrichtung h entgegengesetzt zu dienen in dem einen Gitterfeld ausgerichtet. Damit wird eine schachbrettartige Anordnung der Borstengruppen vorgeschlagen, dank derer ein Bereich der Lauffläche, der über zwei benachbarte Gitterfelder verfahren wird, entsprechend in zwei Richtungen gereinigt werden kann.

Im Gitter können sich die Stäbe in Kreuzungspunkten kreuzen. In den Kreuzungspunkten bzw. in einer ausgewählten Anzahl von Kreuzungspunkten können die Stäbe fest verbunden, wie zum Beispiel verschweißt, verlötet oder verschraubt sein. Die Stäbe können in den Kreuzungspunkten auch ineinander gesteckt sein, indem die Stäbe beispielsweise klauenartig ineinandergreifen. Hierdurch kann eine rasche Montage und/oder Demontage des Gitters erfolgen.

Vorzugsweise sind die ersten Stäbe als haupttragende

Stützelemente ausgebildet. Damit können vorteilhaft über die ersten Stäbe auch Kräfte aufgenommen, die ein Fahrzeug beim Abbremsen oder Beschleunigen auf die Stützfläche und zwar vornehmlich in Längsrichtung der ersten Stäbe auf dieselben wirken. Die ersten Stäbe können einen größeren Querschnitt bzw. ein größeres Widerstandmoment senkrecht zur Stützebene als die zweiten Stäbe aufweisen. Vorzugsweise liegen lediglich die ersten Stäbe mit ihren von der Stützfläche abgewandten Schmalseiten zumindest über einen oder mehrere Bereiche ihrer Längserstreckung auf einem Untergrund auf. Mit demselben können die ersten Stäbe fest verbunden sein. Die ersten Stäbe können alternativ einen T-förmigen Querschnitt mit einem Quersteg und einem Mittensteg aufweisen, wobei der Quersteg parallel zum Untergrund angeordnet sein, auf demselben aufliegen und eventuell mit dem Untergrund fest verbunden sein kann. Hierbei kann der Mittensteg mit seiner endseitigen Stirnfläche Teil der Stützebene sein. Dank ihres sehr einfachen Aufbaues kann die Reinigungsvorrichtung auch als Set mit einzelnen Stäben und Bürstenleisten zum Selbsteinbau angeboten werden.

Vorzugsweise sind die zweiten Stäbe beabstandet zu dem Untergrund angeordnet. Dadurch kann bezüglich der Unterkante der ersten Stäbe bzw. des Untergrundes unterhalb der zweiten Stäbe ein Beabstandungsraum erzielt werden, durch den die Bürsten in Längsrichtung der ersten Stäbe hindurchgeführt angeordnet werden können. In dieser Ausführung der Reinigungsvorrichtung können die Bürsten zur Montage in ihrer Längsrichtung seitlich in die jeweils zugeordneten Zwischenräume eingeschoben werden. Bei einer bereits oben beschriebenen bogenförmigen Ausführungsform der Bürstenleiste kann dieselbe mit Entlastung in Richtung zur Stützebene hin von unten genen die zweiten Stäbe anstoßen und ein Loslösen oder Losrütteln von Schmutzpartikeln von den Borsten bewirken.

In einer bevorzugten Weiterbildung der Reinigungsvorrichtung können die Bürsten und eventuell zusätzlich die Stützvorrichtung in einer fluiddichten Wanne mit einem Boden und umlaufenden Seitenwänden zur Aufnahme eines Reinigungsmittels, eines Dekontaminationsmittels und/oder eines Desinfektionsmittels angeordnet sein. Diese kann zum Beispiel zur Aufbereitung, wie Dekontamination oder Desinfektion, der von den Laufflächen abgebürsteten Schmutzpartikeln dienen. Die Seitenwände können zumindest die Borstenträger, die Stützebene und/oder die Borsten in Ruhelage überragen. Dadurch kann der Fluidspiegel so eingestellt werden, dass dieser die Borstenträger, die Stützebene oder die Enden der Borsten überragt, d. h. diese jeweils vom dem Fluid überspült sind. Wird lediglich der Borstenträger überspült, so kann über die bereits zuvor beschriebene Kapillarwirkung Fluid zu den Borstenenden gesaugt und auf die Laufflächen Übertragen werden. Überspült oder netzt das Fluid die Stützebene, so kann die Lauffläche entsprechend stärker genetzt und somit effektiver gereinigt werden. Eine noch größere Netzung der Laufflächen kann bei einem Fluidspiegel oberhalb der Borstenenden erzielt werden. Dies könnte zum Beispiel bei einer Desinfektion von Laufflächen bei Austreten einer Infektionskrankheit, wie der Vogelgrippe, vorteilhaft sein, wobei die Reinigungsvorrichtung als Schleuse am Rande eines wegen der Vogelgrippe eingerichteten Sperrbezirkes eingesetzt werden kann. Soll jedoch möglichst wenig Fluid durch die Laufflächen mitgenommen werden, wie zum Beispiel beim Einsatz der Reinigungsvorrichtung an einem Halleneingang, so ist lediglich ein Überspülen der Borstenträger zu bevorzugen.

Die Reinigungsvorrichtung kann in einer Ausnehmung eines Fahrweges oder Fußweges so anordenbar sein, dass die Stützebene unterhalb oder in der Höhe des Fahrweges bzw. des Fußweges positioniert ist. Somit können die Borstenenden in Höhe des Fahrweges oder knapp unterhalb endend in Einbaulage der Reinigungsvorrichtung in den Fahrweg oder Fußweg angeordnet sein. Dies hat den Vorteil, dass die Reinigungsvorrichtung für die Fahrzeuge leicht überfahrbar ist, da dieselbe einen ebenen Abschnitt des Fahrweges bilden kann. Sind Seitenwände vorgesehen, so kann die Oberkante der Seitenwände mit der Oberseite des Fahrweges bzw. des Fußweges abschießen.

Die vorliegende Erfindung wird im Folgenden anhand mehrerer, in einer Zeichnung dargestellter Ausführungsbeispiele näher erläutert. In der Zeichnung zeigen:
- Fig. 1: eine perspektivische Draufsicht auf eine erste Ausführungsform einer Reinigungsvorrichtung,
- Fig. 2a-c: jeweils eine perspektivische Draufsicht auf die Reinigungsvorrichtung gemäß Fig. 1, die von einem Reifen überfahren wird,
- Fig.: 3a-c jeweils eine Seitenansicht der Reinigungsvorrichtung gemäß Fig. 1, mit Darstellung des Überfahrvorganges des Reifens,
- Fig. 4: eine perspektivische Seitenansicht der Reinigungsvorrichtung gemäß der Fig. 1 mit hintereinander gestaffelt angeordneten Borstenreihen und mit in einer ersten Richtung geneigten Borsten,
- Fig. 5a: eine perspektivische Seitenansicht einer Ausführungsform gleich der in Fig. 4 gezeigten, wobei die Borsten der Reihen alternierend in zwei Richtungen geneigt sind,
- Fig. 5b: eine perspektivische Seitenansicht gemäß der Ausführungsform der Reinigungsvorrichtung in Fig. 5a, wobei die Borsten der Borstenreihen "auf Lücke" gesetzt sind,
- Fig. 6a: eine Seitenansicht einer fünften Ausführungsform der Reinigungsvorrichtung mit doppelreihig angeordneten Borstenbüscheln,
- Fig. 6b: eine perspektivische Seitenansicht der fünften Ausführungsform gemäß Fig. 6a, wobei mehrere Borstenreihen hintereinander angeordnet sind,
- Fig. 7a: eine perspektivische Seitenansicht einer siebten Ausführungsform der Reinigungsvorrichtung mit in zwei Richtungen geneigten Borstenbüscheln,
- Fig. 7b: eine perspektivische Seitenansicht der siebten Ausführungsform gemäß Fig. 7a mit einer Vielzahl von hintereinander gestaffelten Borstenreihen,
- Fig. 8: eine Seitenansicht einer achten Ausführungsform der Reinigungsvorrichtung mit unterschiedlich gerichteten Borstenbüscheln,
- Fig. 9: eine Seitenansicht einer neunten Ausführungsform der Reinigungsvorrichtung,
- Fig. 10: eine Seitenansicht einer zehnten Ausführungsform der Reinigungsvorrichtung,
- Fig. 11: eine Draufsicht auf einen Ausschnitt der zehnten Ausführungsform der Reinigungsvorrichtung,
- Fig. 12: eine schematische Seitenansicht der zehnten Ausführungsform der Reinigungsvorrichtung mit Vorspannung der Bürste,
- Fig. 13: eine Seitenansicht einer elften Ausführungsform der Reinigungsvorrichtung mit angefülltem Fluid,
- Fig. 14: eine Seitenansicht einer zwölften Ausführungsform der Reinigungsvorrichtung mit zusätzlicher Wanne und
- Fig. 15: eine Seitenansicht einer dreizehnten Ausführungsform der Reinigungsvorrichtung mit erhöhten Seitenwänden.

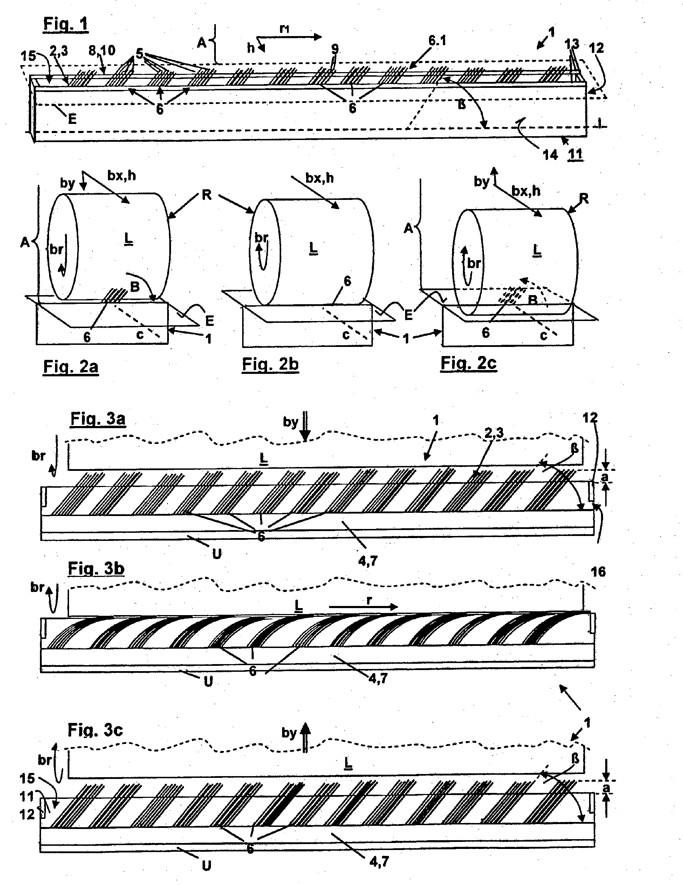

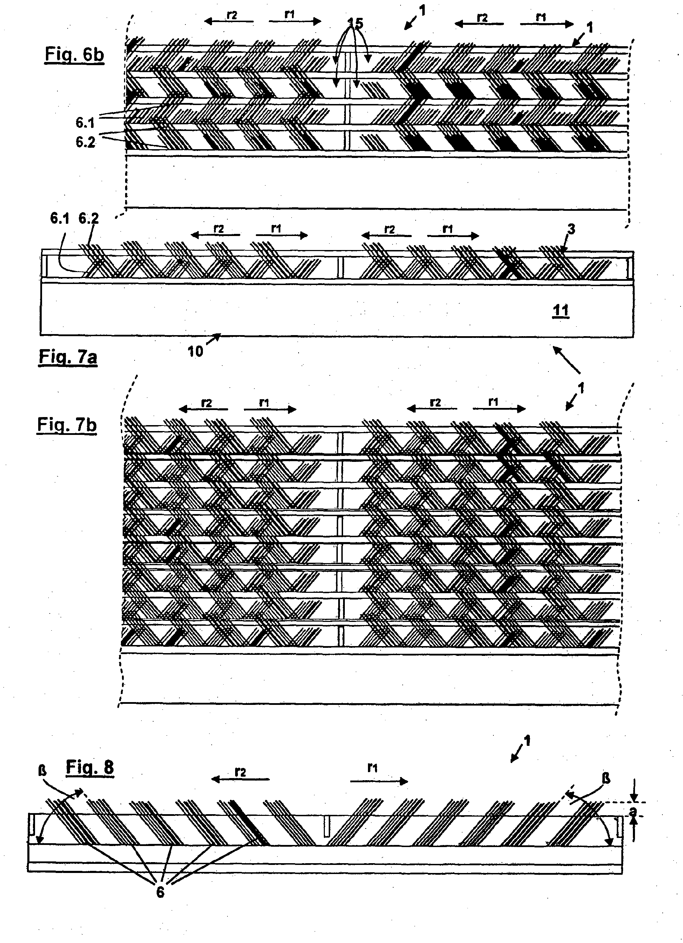

In den Figuren 1 bis 15 werden in verschiedenen Ansichten mehrere Ausführungsformen einer Reinigungsvorrichtung 1 für verschmutzte und/oder kontaminierte Oberflächen, insbesondere für Laufflächen L von Reifen R von hier nicht weiter dargestellten Fahrzeugen, gezeigt. Die Reinigungsvorrichtung 1 weist eine Bürstenvorrichtung 2 zur reinigenden Behandlung der Laufflächen L auf, die Bürsten 3 mit Borstenträgern 4 und Borsten 5 umfasst. Die Borsten 5 sind zu Borstenbüscheln 6 zusammengefasst. Die Borstenträger 4 sind jeweils als Bürstenleiste 7 ausgebildet. Die Reinigungsvorrichtung 1. umfasst ferner eine Stützvorrichtung 8 zur Abstützung der Laufflächen L in eine Stützebene E, wobei die Stützebene E einen Arbeitsraum A für die Laufflächen L begrenzt, der in allen Figuren oberhalb der Stützebene E angeordnet ist. Die Borsten 5 erstrecken sich in den Borstenbüscheln 6 mit ihren freien Enden 9 zum Arbeitsraum A hin, wobei sie die Stützebene E um einen in Fig. 3a, 3c und 8 beispielgebend gezeigten Betrag a überragen. Die Borsten 5 schließen mit der Stützebene E in einer Ruheposition einen Neigungswinkel ß größer 0° und kleiner 90°, hier beispielgebend von etwa 35° ein, wobei die Borsten 5, bis auf in Figuren 2b und 3b, in den Figuren in der Ruheposition wiedergegeben sind.

Sämtliche hier beispielhaft beschriebene Ausführungsformen der Reinigungsvorrichtung 1 sind für eine Hauptbewegungsrichtung h ausgelegt, in der die Fahrzeuge in einer Translationsbewegung bₓ über die Stützebene E fahrbar sind. Ferner erstrecken sich hier die Borsten 5 bzw. die Borstenbüschel 6 senkrecht zur Hauptbewegungsrichtung h.

In der ersten Ausführungsform der Reinigungsvorrichtung gemäß Figuren 1 und 3 ist lediglich eine Bürste 3 mit einer ersten Reihe 6.1 Borstenbüschel 6 vorgesehen, die in einer ersten Richtung senkrecht zur Hauptbewegungsrichtung h geneigt sind. Die Stützvorrichtung 8 umfasst ein Gestell 10 mit parallel beabstandeten Stäbe 11, 12, wobei die Stäbe 11, 12 jeweils Schmalseiten 13 und große Seitenfläche 14 aufweisen und die dem Arbeitsraum A zugewandten Schmalseiten 13 die Stützebene E bilden. Die Stäbe 11, 12 umschließen einen kastenförmigen Zwischenraum 15, in dem die Bürste 3 angeordnet ist.

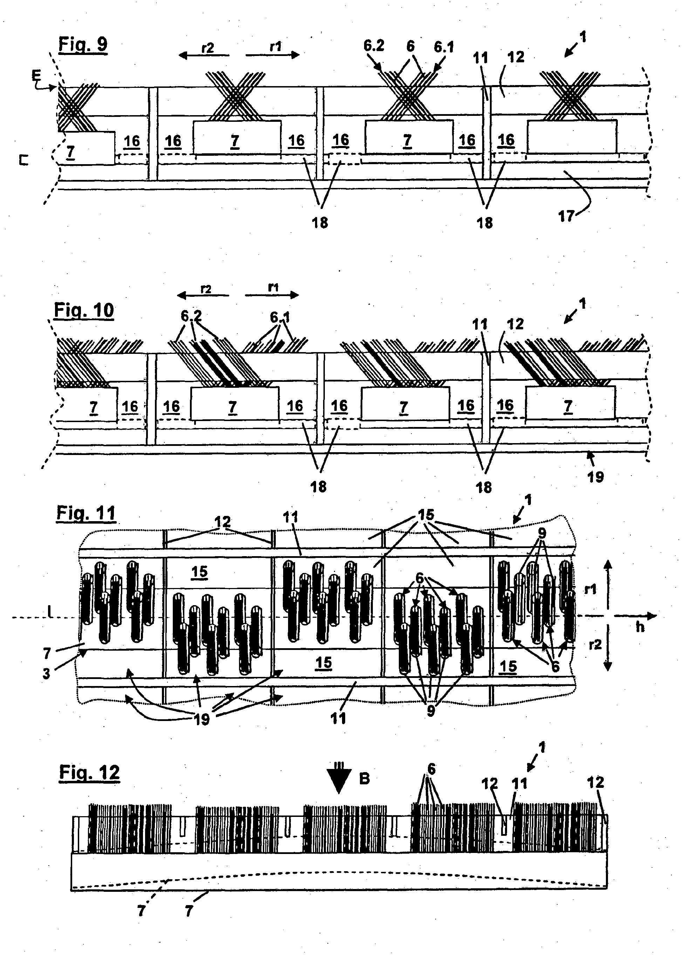

Der Reifen R bewegt sich in einer Drehbewegung bᵣ in Hauptbewegungsrichtung h, wobei infolge der Drehbewegung bᵣ des Reifens R zugleich eine Bewegung by der Lauffläche senkrecht zur Bewegung bₓ in x-Richtung bzw. in Hauptbewegungsrichtung h herfolgt und die Lauffläche L über der Stützebene E abrollt. Wie in den Figuren 2a-c und 3a-c jeweils in einer Abfolge des Abrollvorganges des Reifens wiedergegeben, werden die Borstenbüschel 6 bzw. die Borsten 5 mit ihren freien Enden 9 beim Überfahren der Stützebene E aus einer in Fig. 2a und 3a gezeigten Ruheposition um eine Biegeachse c parallel zur Hauptbewegungsrichtung h bis zur Stützebene E hin elastisch ausgelenkt oder umgebogen (2b und 3b). Nach erfolgtem Überfahren des Reifens R über die Reihe 6.1 bzw. über die Borstenbüschel 6 schwingen die die Borsten 5 in den Borstenbüschel 6 elastisch in ihre Ruheposition zurück (Fig. 2c und 3c). Während der Biegung der Borsten 5 aus ihrer Ruheposition durch die Lauffläche L schaben oder bürsten die Borsten 5 mit ihren freien Enden 9 in erster Richtung r₁ entlang der Lauffläche L, wodurch die Lauffläche L gereinigt wird, indem anhaftende, hier nicht näher dargestellte Schmutzpartikel von der Lauffläche L abgeschabt werden. Diese können, wie weiter unten anhand einer neunten Ausführungsform der Reinigungsvorrichtung 1 gemäß Fig. 9 beispielgebend ausgeführt, in einer Auffangwanne 16-aufgefangen werden. Der klareren Darstellung halber ist in Fig. 2 lediglich ein Borstenbüschel 6 dargestellt. Aus gleichem Grunde wurde in den Figuren 3, 6 und 8 eine vordere Seitenfläche 14 des Gestelles 10 weggelassen.

Es versteht sich, dass in den hier schematischen Darstellungen der Reinigungsvorrichtung 1 und ggf. der Reifen R in den Figuren Proportionen derselben unter dem Gesichtspunkt einer klaren Darstellung gewählt wurden, wobei diese Proportionen nicht unbedingt zweckdienlichen oder tatsächliche Ausführungsformen der Reinigungsvorrichtung 1 entsprechen müssen.

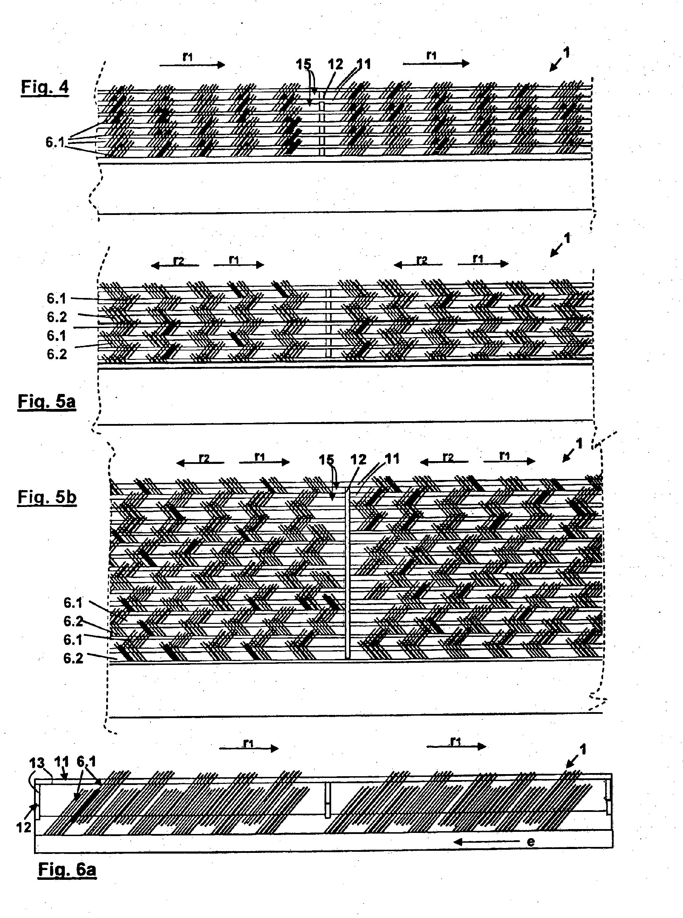

Die Stäbe 11, 12 sind in der Regel rechtwinklig zueinander und somit gitterartig angeordnet. Die Figuren 4 bis 8 dienen im Wesentlichen dazu, mögliche Anordnungen der Borstenbüschel 6 zu demonstrieren. sind die Stäbe 11, 12 gitterartig angeordnet. In der zweiten Ausführungsform der Reinigungsvorrichtung 1 gemäß Figur 4 sind eine Vielzahl von Reihen 6.1 mit Borsten 6 vorgesehen, von denen hier nicht alle gezeigt sind. Die Borsten 5 in den Borstenbüscheln 6 erstrecken sich mit einer Komponente in erster Richtung r₁ senkrecht zur Hauptbewegungsrichtung h, wobei die Borstenreihen 6.1 hintereinander gestaffelt in Zwischenräumen 15 zwischen den Stäben 11, 12 angeordnet.

In der dritten Ausführungsform gemäß Fig. 5a und b sind die Bürsten 3 bezüglich der Neigung ihrer Borstenbüschel 6 alternierend zueinander angeordnet. Hierbei erstrecken sich die Borstenbüschel 6 einer hier vorderen zweiten Reihe 6.1 in eine zweite Richtung r₂, während sich die Borstenbüschel 6 der nachfolgenden ersten Reihe 6.1 in erste Richtung r₁ erstrecken. Somit können mit Überfahren der Reifen R deren Laufflächen L in erster Richtung r₁ und in zweiter Richtung r₂ abgebürstet und gereinigt werden. Während bei der in Fig. 5a dargestellten dritten Ausführungsform die Borstenbüschel 6 bezüglich der Hauptbewegungsrichtung h hintereinander angeordnet sind, sind die Borstenbüschel 6 in der vierten Ausführungsform gemäß Fig. 5b "auf Lücke" gesetzt. Letztere Ausführungsform bietet den Vorteil, dass die Lauffläche L lückenloser gereinigt werden kann.

In den Figuren 6 bis 7 sind Ausführungsformen der Reinigungsvorrichtung 1 gezeigt, bei denen die Borstenträger 4 jeweils zwei Reihen 6.1, 6.2 mit Borstenbüscheln 6 aufweisen. Während in den Ausführungsformen gemäß Fig. 6a und 6b die Borstenbüschel 6 einer Bürstenleiste 7 in eine Richtung weisen, sind die Borfstenbüschel 6 in den Ausführungsformen gemäß Fig. 7a und 7b einer ersten Reihe 6.1 in die erste Richtung r₁ und die einer zweiten Reihe 6.2 in die zweite Richtung r₂ gezeigt. Die Neigung der Borstenbüschel 6 einer Borstenleiste 7 in zwei Richtungen r₁, r₂ bewirkt, dass sich die Reibungskräfte, die mit Abschaben der freien Enden 9 über die Lauffläche L entstehen, bezüglich der Bürstenleiste 7 zumindest in etwa aufheben. Exemplarisch ist zudem in Figur 6a gezeigt, dass die Bürstenleisten 7 zur Montage ihrer Länge nach in einer Einschubrichtung e in die Stützvorrichtung 8 einschiebbar sind.

In Fig. 8 wird eine achte Ausführungsform der Reinigungsvorrichtung 1 gezeigt, in der die Bürste 3 mit einer Reihe Borstenbüschel 6 bestückt ist. Hierbei sind die Borstenbüschel 6 der linken Hälfte der Bürste 3 in zweite Richtung r₂ und die Borstenbüschel 6 der hier rechten Seite der Bürste 3 in erste Richtung r₁ geneigt.

Die in Fig. 9 bis Fig. 15 schematisch wiedergegebene Ausführungsformen der Reinigungsvorrichtung 1 unterscheiden sich von den vorhergehenden insbesondere dadurch, dass die Bürstenleisten 7 jeweils mit ihrer Längsrichtung 1 in Hauptbewegungsrichtung h und somit, bis auf die in Figuren 11 und 12, senkrecht zur Bildebene verlaufen. Die Bürstenleiste 7 weisen jeweils zwei Reihen 6.1, 6.2 mit Borstenbüscheln 6 auf, wobei die Borstenbüschel 6 einer ersten Reihe 6.1 in erste Richtung r₁ und die Borstenbüschel 6 der anderen Reihe 6.2 in zweite Richtung r₂ geneigt sind.

Mit Überfahren der Reinigungsvorrichtung 1 werden somit, wie in den vorhergehenden Ausführungsformen, die Borsten 5 um eine Biegeachse c gebogen, die in Hauptbewegungsrichtung h und hier senkrecht zur Bildebene verläuft, so dass die freien Enden 9 der Borsten 5 senkrecht zur Hauptbewegungsrichtung h entlang der Lauffläche L entlang schaben oder bürsten können. Wie auch in den Figuren 6a und 8, so ist auch in den Figuren 9 bis 15 erkennbar, dass die Stäbe 11, 12 des Gestelles 10 unterschiedlich ausgebildet sind. In allen hier beispielgebend gezeigten Ausführungsformen der Reinigungsvorrichtung 1 erstreckt sich ein als erster Stab 11 ausgebildeter Stab jeweils in Längsrichtung 1 der Bürstenleiste 7, wobei er mit seiner von der Stützebene E abgewandten Schmalseite 13 auf einem Untergrund U aufliegt. Der zweite Stab 12 ist seiner Höhe kleiner als der erste Stab 11 ausgelegt. Da er mit seiner dem Arbeitsraum A zugewandten Schmalseite 13 die Stützebene E bildet, ist er mit seiner dem Aufnahmeraum A abgewandten Schmalseite 13 so beabstandet zum Untergrund U angeordnet. Es entsteht zwischen dem zweiten Stab 12 und dem Untergrund U ein Beabstandungsraum 17, durch den die Bürstenleiste 7 geführt ist. Dank dieser Konstruktion kann die Bürstenleiste 7 in Längsrichtung 1 der ersten Stäbe 11 seitlich in den Zwischenräumen 15 eingeschoben bzw. wieder entfernt werden. Gemäß Figur 9 sind die Bostenbüschel 6 sich kreuzend angeordnet.

Nicht eigens dargestellt in den Figuren ist das Merkmal der Reinigungsvorrichtung 1, dass die Stäbe 11, 12 zumindest in einigen ihrer Kreuzungspunkte hintereinander verschweißt sind.

Wie bereits oben angemerkt, weist die Reinigungsvorrichtung 1 eine in Fig. 9 dargestellte Auffangwanne 16 zur Aufnahme abgeschabter Schmutzpartikel auf. Hierzu sind die Bürstenleisten 7 beabstandet zu den ersten Stäben 11 angeordnet und zur Auffangwanne 16 führende Durchgangsöffnungen 18 vorgesehen, durch die die Schmutzpartikel in die Auffangwanne 16 gelangen können.

Die in Figuren 10 bis 12 wiedergegebene zehnte Ausführungsform der Reinigungsvorrichtung 1 unterscheidet sich von der neunten Ausführungsform der Reinigungsvorrichtung 1 dadurch, dass mehrere in einer Richtung. r₁, r₂ wirksame und parallel zueinander ausgerichtete Bostenbüschel 6 als Gruppe in der Bürstenleiste 7 angeordnet sind. Figur 11 entnehmbar ist, dass jeweils in einem Gitterfeld 19, das durch die sich kreuzenden Stäbe 11, 12 gebildet wird, eine Gruppe von Bostenbüscheln 6, hier von neun Bostenbüscheln 6, angeordnet ist, wobei jeweils im benachbarten Gitterfeld 19 eine Gruppe von Bostenbüscheln 6 positioniert ist, die bezüglich der Richtung r entgegengesetzt zu den anderen ausgerichtet sind. Es ist also ein Gitterfeld 19 mit Borstenbüscheln 6 der einen Richtung r₁ schachbrettmusterartig umgeben von Gitterfeldern 19 mit Borstenbüschein der anderen Richtung r₂. Diese Anordnung hat den Vorteil, dass die Bostenbüschel 6 dichter als beilspielsweise bei denen der neunten Ausführungsform der Reinigungsvorrichtung 1 aneinander in der Bürstenleiste 7 angeordnet werden können.

In Figur 12 wird anhand einer zweiten Seitenansicht der zehnten Ausführungsform der Reinigungsvorrichtung 1 gemäß Figur 10 ein weiteres mögliches Merkmal der Reinigungsvorrichtung 1 aschematisch wiedergegeben, welches besagt, dass die Bürstenleise 7 der Bürste 3 in ihrer Längsrichtung einen gebogenen Verlauf aufweist. Dadurch ist die Bürstenleiste 7 hier nach oben durchgebogen. Der Verlauf ist in der Darstellung gestrichelt und, der Deutlichkeit halber, hinsichtlich der Biegung übertrieben dargestellt. Unter Belastung B, wie durch überfahrende Reifen, wird die Bürstenleiste 7 entgegen ihrer Biegung nach unten in eine gestreckte oder weiniger gebogene Form hinein elastisch verformt. Dieser Zustand ist mit durchgezogene Linie wiedergegeben. Mit Entlastung, d.h. wenn der Reifen über die Bürstenleiste 7 überfahren hat, kehrt die Bürstenleiste 7 elastisch in ihre gebogene Form zurück und schlägt unterseitig an hier mittleren zweiten Stäben 12 an, unter denen sie geführt ist. Durch dieses Anschlagen können sich infolge des Reinigungsvorganges angesammelte Schmutzpartikel von den freien Enden 9 der Borsten 5 loslösen oder losrütteln und in die Auffangwanne 16 fallen.

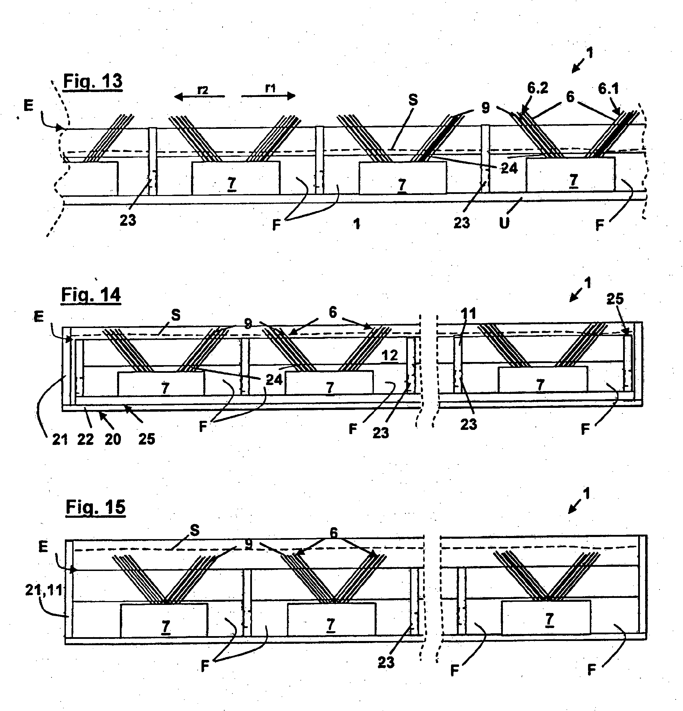

Anhand der in den Figuren 13 bis 15 dargestellten Ausführungsformen der Reinigungsvorrichtung 1 wird ein weiteres Merkmal der Reinigungsvorrichtung 1 gezeigt, gemäß dem die Stützvorrichtung 8 und die Bürsten 3 in einer fluiddichten Wanne 20 mit einem Boden 21 und umlaufenden Seitenwänden 22 zur Aufnahme eines Fluid F angeordnet sind. Dieses Fluid F kann beispielsweise ein Reinigungsmittel, ein Dekontaminationsmittel und/oder ein Desinfektionsmittel sein. Bei allen Ausführungsformen sind Ausgleichsöffnungen 23 vorgesehen, um einen gleich hohen Fluidspiegel S in der Reinigungsvorrichtung 1 zu halten. Die Ausführungsformen der Reinigungsvorrichtung 1 gemäß den Figuren 10 bis 12 unterscheiden sich voneinander unter anderem dadurch, dass der maximale Fluidspiegel S unterschiedlich hoch bezüglich der Borsten 5 sein kann.

In der in Fig. 13 dargestellten elften Ausführungsform netzt das Fluid F lediglich einen Fußbereich 24 der Borsten 5. Obwohl die Borsten 5 in den hier gezeigten Ausführungsbeispielen aus Polyamid gefertigt sind und somit nicht saugfähig sind, kann infolge einer Kapillarwirkung Fluid F zwischen den in Borstenbüscheln 6 eng anliegenden Borsten 5 zu den freien Enden 9 der Borsten 5 hoch gesaugt werden. Dadurch kann eine über die Borstenenden 9 geführte Lauffläche L entlang eines Weges, über den die freien Enden 9 der Borsten 5 unter Biegung derselben entlang der Lauffläche L geführt werden, benetzt werden.

Eine stärkere Benetzung der Lauffläche L kann dadurch erzielt werden, indem, wie in Fig. 14 dargestellt, die Stützebene E vom Fluid F überspült wird, d. h. der Fluidspiegel S oberhalb der Stützebene E angeordnet ist. Dadurch werden die Laufflächen L im Augenblick ihres Aufliegens auf der Stützebene E benetzt. Abweichend von den übrigen Ausführungsformen ist die Stützvorrichtung 8 mit den Bürsten 3 in der zwölften Ausführungsform gemäß Fig. 14 als Einsatz 25 in die Wanne 20 eingesetzt und kann daher leicht wieder aus derselben entfernt werden.

In der dreizehnten Ausführungsform der Reinigungsvorrichtung 1 gemäß Fig. 15 reicht der Fluidspiegel S bis über die freien Enden 9 der Borsten 5. Dadurch bürsten die freien Borstenenden 9 mit Überfahren des Reifens R vollständig innerhalb des Fluid F über die Lauffläche L, so dass hier von einer vollständigen Nassreinigung der Laufflächen L gesprochen werden kann. Die Seitenwände 22 der Wanne 20 werden in dieser Ausführungsform durch erste Stäbe 11 und zweite Stäbe 12 gebildet, wobei diese sich jedoch über die gesamte Höhe der Wanne 20 erstrecken. Abweichend von übrigen Ausführungsformen der Reinigungsvorrichtung 1, sind die Borstenbüschel 6 einer Reihe in zwei Richtungen r₁ und r₂ geneigt. Hierbei alternieren die Borstenbüschel 6 in Längsrichtung der Bürstenleiste 7. Diese Ausführungsform ist zum Beispiel für einen Einsatz bei Desinfektionsschleusen bei Sperrbezirken aufgrund des Auftretens von Vogelgrippe, Maul- und Klauenseuche oder dergleichen am besten geeignet.

### Bezugzeichenliste

- 1: Reinigungsvorrichtung
- 2: Bürstenvorrichtung
- 3: Bürsten
- 4: Borstenträger
- 5: Borsten
- 6: Borstenbüschel
- 6.1: erste Reihe
- 6.2: zweite Reihe
- 7: Bürstenleiste
- 8: Stützvorrichtung
- 9: freies Ende
- 10: Gestell
- 11: erster Stab
- 12: zweiter Stab
- 13: Schmalseite
- 14: große Seitenfläche
- 15: Zwischenraum
- 16: Auffangwanne
- 17: Beabstandungsraum
- 18: Durchgangsöffnung
- 19: Gitterfeld
- 20: Wanne
- 21: Boden
- 22: Seitenwand
- 23: Ausgleichsöffnung
- 24: Fußbereich
- 25: Einsatz
- ß: Neigungswinkel
- a: Betrag
- bₓ: Translationsbewegung
- b_{y}: Laufflächenbewegung in y-Richtung
- bᵣ: Drehbewegung
- c: Biegeachse
- e: Einschubrichtung
- h: Hauptbewegungsrichtung
- l: Längsrichtung
- r₁: erste Richtung
- r₂: zweite Richtung
- A: Arbeitsraum
- B: Belastung
- E: Stützebene
- F: Fluid
- L: Lauffläche
- R: Reifen
- S: Fluidspiegel
- U: Untergrund

## Patentansprüche

1. Reinigungsvorrichtung (1) für verschmutzte und/oder kontaminierte Oberflächen, insbesondere für Laufflächen von Schuhen oder von Reifen von Fahrzeugen, wobei die Reinigungsvorrichtung (1) eine Bürstenvorrichtung (2) mit einen Borstenträger (4) und Borsten (5) umfassenden Bürsten (3) zur reinigenden Behandlung der Laufflächen (1) sowie, ein Stützvorrichtung (8) zur Abstützung der Laufflächen (L) in einer Stützebene (E) aufweist, wobei die Stützebene (E) einen Arbeitsraum (A) für die Laufflächen (L) begrenzt und die Borsten (5) sich jeweils mit einem freien Ende (9) zum Arbeitsraum (A) und zur Stützebene (E) hin erstrecken, wobei die Borsten (5) in einer Ruheposition mit der Stützebene (E) einen Neigungswinkel (ß) größer 0° und kleiner 90° einschließen, die Stützebene (E) mit ihren freien Enden (9) durchgreifen, und die Stützebene (E) mit einem Betrag (a) überragen, **dadurch gekennzeichnet, dass** die Reinigungsvorrichtung (1) für eine Hauptbewegungsrichtung (h) ausgelegt ist, in der die Fahrzeuge über die Stützebene (E) fahrbar sind bzw. die Laufflächen von Schuhen an der Stützebene (E) abrollbar sind, und dass sich die Borsten (5) in oder senkrecht zur Hauptbewegungsrichtung (h) längserstrecken.

2. Reinigungsvorrichtung nach Anspruch 1, **dadurch gekennzeichnet, dass** die Borstenträger (4) statisch zur Stützeberie (E) angeordnet sind.

3. Reinigungsvorrichtung nach Anspruch 1 oder 2, **dadurch gekennzeichnet, dass** der Neigungswinkel (ß) größer 30° und kleiner 85° ist.

4. Reinigungsvorrichtung nach einem der Ansprüche 1 bis 3, **dadurch gekennzeichnet, dass** der Neigungswinkel (β) größer 60° und kleiner 80° ist

5. Reinigungsvorrichtung einem der Ansprüche 1 bis 4, **dadurch gekennzeichnet, dass** sich die Borsten (5) bezüglich der Stützebene (E) zu gleichen oder zu etwa gleichen Teilen zu beiden Richtungen (r₁, r₂) senkrecht zur Hauptbewegungsrichtung (h) längserstrecken.

6. Reinigungsvorrichtung nach einem der Ansprüche 1 bis 4, **dadurch gekennzeichnet, dass** die Borsten (5) zu Borstenbüschel (6) zusammengefasst sind, die in einer Reihe (6.1) oder mehreren Reihen (6.1, 6.2) auf dem Bostenträger (4) einzeln oder in Gruppen von mehreren Borstenbüscheln (6) gleicher Erstreckungsrichtung zusammengefasst angeordnet sind.

7. Reinigungsvorrichtung nach einem der Ansprüche 1 bis 6, **dadurch gekennzeichnet, dass** die Borsten (5) bezüglich der Stützebene (E) in einer ersten Reihe (6.1) mit einer Komponente in einer ersten Richtung (r₁) senkrecht zur Hauptbewegungsrichtung (h) und in einer zweiten Reihe (6.2) mit einer Komponente in einer zur ersten Richtung (r₁) entgegengesetzten zweiten Richtung (r₂) senkrecht zur Hauptbewegungsrichtung (h) angeordnet sind.

8. Reinigungsvorrichtung nach Anspruch 6 oder 7, **dadurch gekennzeichnet, dass** die Reiben (6.1, 6.2) parallel und alternierend zueinander angeordnet sind.

9. Reinigungsvorrichtung nach Anspruch 8, **dadurch gekennzeichnet, dass** auf jedem Borstenträger (4) eine gerade Anzahl von alternierenden Reihen (6.1, 6.2) angeordnet ist.

10. Reinigungsvorrichtung nach einem der Ansprüche 6 bis 9, **dadurch gekennzeichnet, dass** sich die Reihen (6.1, 6.2) senkrecht zur oder in Hauptbewegungsrichtung (h) längserstrecken.

11. Reinigungsvorrichtung nach Anspruch 10, **dadurch gekennzeichnet, dass** der Borstenträger (4) als Bürstenleiste (7) ausgebildet ist.

12. Reinigungsvorrichtung nach Anspruch 11, **dadurch gekennzeichnet, dass** die Bürstenleiste (7) in Längsrichtung (1) bogenförmig ausgebildet ist.

13. Reinigungsvorrichtung nach Anspruch 12, **dadurch gekennzeichnet, dass** die Bürstenleiste (7) mittig zur Stützebene (E) hin gewölbt ausgebildet ist.

14. Reinigungsvorrichtung nach einem der Ansprüche 1 bis 13, **dadurch gekennzeichnet, dass** in den Borstenbüscheln (6) zwischen den Borsten (5) Zwischenräume vorhanden sind, die infolge der Kapillarwirkung netzende Flüssigkeiten oder Fluids ansaugen.

## Claims

1. Cleaning device (1) for soiled and/or contaminated surfaces, particularly for bearing surfaces of shoes or tires of vehicles, wherein the cleaning device (1) comprises a brush device (2) with a bristle carrier (4) and with brushes (3) comprising bristles (5) for the cleaning treatment of said bearing surfaces (L) and a supporting device (8) for supporting the bearing surfaces (L) in a supporting plane (E), wherein said supporting plane (E) defines a working compartment (A) for the bearing surfaces (L) and the bristles (5) respectively extend toward the working compartment (A) and toward the supporting plane (E) with a free end (9) thereof, wherein the bristles in a rest position together with said supporting plane (E) include an angle of inclination (β) greater than 0° and smaller than 90° and penetrate with their free ends (9) through the supporting plane (E) and surmount the supporting plane (E) by an amount (a), **characterized in that** the cleaning device (1) is constructed for a main moving direction (h) in which the vehicles can be moved across the supporting plane (E) or in which the bearing surface of shoes can be rolled off against the supporting plane (E), and that the bristles (5) longitudinally extend in or vertically to the main moving direction (h).

2. Cleaning device according to claim 1, **characterized in that** the bristle carriers (4) are statically arranged with respect to the supporting plane (E).

3. Cleaning device according to claim 1 or 2, **characterized in that** the angle of inclination (β) is greater than 30° and smaller than 85°.

4. Cleaning device according to one of the claims 1 to 3, **characterized in that** the angle of inclination (β) is greater than 60° and smaller than 80°,

5. Cleaning device according to one of the claims 1 to 4, **characterized in that** the bristles (5) longitudinally extend vertically to the main moving direction (h) at equal or almost equal shares in both directions (r₁, r₂) with respect to the supporting plane (E).

6. Cleaning device according to one of the claims 1 to 4, **characterized in that** the bristles (5) are combined into bunches of bristles (6), which are arranged on the bristle carrier (4) in one row (6.1) or in several rows (6.1, 6.2) individually or combined into groups of several bunches of bristles (6) having the same direction of extension.

7. Cleaning device according to one of the claims 1 to 6, **characterized in that** the bristles (5), with respect to the supporting plane (E), are arranged in a first row (6.1) with a component in a first direction (r₁) vertically to the main moving direction (h) and in a second row (6.2) with a component in a second direction (r₂), which is opposite to the first direction (r₁), vertically to the main moving direction (h).

8. Cleaning device according to claim 6 or 7, **characterized in that** the rows (6.1, 6.2) are arranged parallel and alternating to each other.

9. Cleaning device according to claim 8, **characterized in that** on each bristle carrier (4) an even number of alternating rows (6.1, 6.2) is arranged.

10. Cleaning device according to one of the claims 6 to 9, **characterized in that** the rows (6.1, 6.2) longitudinally extend vertically to or in the main moving direction (h).

11. Cleaning device according to claim 10, **characterized in that** the bristle carrier (4) is configured as a brush strip (7).

12. Cleaning device according to claim 11, **characterized in that** the brush strip (7) is arc-shaped in the longitudinal direction (I).

13. Cleaning device according to claim 12, **characterized in that** the brush strip (7) is centrally curved toward the supporting plane (E).

14. Cleaning device according to one of the claims 1 to 13, **characterized in that** intermediate spaces exist between the bristles (5) in the bunches of bristles (6) which aspirate wetting liquids or fluids as a result of the capillary action.

## Revendications

1. Dispositif de nettoyage (1) pour des surfaces sales et/ou contaminées, notamment pour des portées de chaussures ou de pneus de véhicules, le dispositif de nettoyage (1) comprenant un dispositif de brosse (2) avec des brosses (3) comportant un support de soies (4) et des soies (5) pour le traitement nettoyant des portées (L) ainsi qu'un dispositif de support (8) pour supporter les portées (L) dans un plan de support (E), le plan de support (E) délimitant un compartiment de travail (A) pour les portées (L), et les soies (5) s'étendant chacune vers le compartiment de travail (A) et vers le plan de support (E) par une extrémité libre (9), les soies (5), dans une position de repos, incluant avec le plan de support (E) un angle d'inclinaison (β) supérieur à 0° et inférieur à 90° et les soies pénétrant avec ses extrémités libres (9) par le plan de support (E) et dépassant le plan de support (E) par un montant (a), **caractérisé en ce que** le dispositif de nettoyage (1) est conçu pour une direction principale de mouvement (h) dans laquelle les véhicules peuvent rouler sur le plan de support (E) ou les portées de chaussures peuvent être déroulées contre le plan de support (E) et **en ce que** les soies (5) s'étendent longitudinalement dans ou verticalement par rapport à la direction principale de mouvement (h).

2. Dispositif de nettoyage selon la revendication 1, **caractérisé en ce que** les supports de soies (4) sont arrangés statiquement par rapport au plan de support (E).

3. Dispositif de nettoyage selon les revendications 1 ou 2, **caractérisé en ce que** l'angle d'inclinaison (β) est supérieur à 30° et inférieur à 85°.

4. Dispositif de nettoyage selon l'une des revendications 1 à 3, **caractérisé en ce que** l'angle d'inclinaison (β) est supérieur à 60° et inférieur à 80°.

5. Dispositif de nettoyage selon l'une des revendications 1 à 4, **caractérisé en ce que** les soies (5) s'étendent longitudinalement et perpendiculairement à la direction principale de mouvement à parts égales ou à peu près égales vers les deux directions (r₁, r₂), par rapport au plan de support (E).

6. Dispositif de nettoyage selon l'une des revendications 1 à 4, **caractérisé en ce que** les soies (5) sont combinées en touffes de soies (6) arrangées en un (6.1) ou plusieurs rangs (6.1, 6.2) individuellement ou en groupes de plusieurs touffes de soies (6) d'une même direction d'extension sur le support de soies (4).

7. Dispositif de nettoyage selon l'une des revendications 1 à 6, **caractérisé en ce que** les soies (5) sont, par rapport au plan de support (E), arrangées en un premier rang (6.1) avec une composante dans une première direction (r₁) perpendiculaire à la direction principale de mouvement (h) et en un deuxième rang (6.2) avec une composante dans une deuxième direction (r₂) opposée à la première direction et perpendiculaire à la direction principale de mouvement (h).

8. Dispositif de nettoyage selon les revendications 6 ou 7, **caractérisé en ce que** les rangs (6.1, 6.2) sont arrangés de manière parallèle et alternante l'un par rapport à l'autre.

9. Dispositif de nettoyage selon la revendication 8, **caractérisé en ce qu'**un nombre paire de rangs alternants est arrangé sur chacun des supports de soies (4).

10. Dispositif de nettoyage selon l'une des revendications 6 à 9, **caractérisé en ce que** les rangs (6.1, 6.2) s'étendent longitudinalement dans ou perpendiculairement à la direction principale de mouvement (h).

11. Dispositif de nettoyage selon la revendication 10, **caractérisé en ce que** le support de soies (4) est agencé comme de barrette de brosse (7).

12. Dispositif de nettoyage selon la revendication 11, **caractérisé en ce que** la barrette de brosse (7) est arquée dans la direction longitudinale (I).

13. Dispositif de nettoyage selon la revendication 13, **caractérisé en ce que** la barrette de brosse (7) est cambrée au milieu vers le plan de support (E).

14. Dispositif de nettoyage selon l'une des revendications 1 à 13, **caractérisé en ce que** des interstices existent entre les soies (5) dans les touffes de soies (6), lesdits interstices aspirant des liquides ou fluides mouillants par suite de l'effet de capillarité.
